# EUROPÄISCHE PATENTSCHRIFT

(11) **EP 1 432 945 B1**
(45) Veröffentlichungstag und Bekanntmachung des Hinweises auf die Patenterteilung: **16.05.2007**
(21) Anmeldenummer: 02781202.3
(22) Anmeldetag: 02.10.2002
(51) Int. Cl.: F16N 19/00, F16H 57/04

(54) **VERFAHREN ZUR ÖLBEFÜLLUNG FÜR GETRIEBE UND BEFÜLLEINRICHTUNG ZUR DURCHFÜHRUNG DES VERFAHRENS**
METHOD FOR FILLING OIL FOR A TRANSMISSION AND FILLING DEVICE FOR CARRYING OUT THE METHOD
PROCEDE POUR REMPLIR D'HUILE UNE BOITE DE VITESSE ET SYSTEME DE REMPLISSAGE PERMETTANT DE METTRE EN OEUVRE CE PROCEDE

(30) Priorität: 05.10.2001 DE 10149134
(43) Veröffentlichungstag der Anmeldung: 30.06.2004
(73) Patentinhaber: ZF FRIEDRICHSHAFEN Aktiengesellschaft, 88038 Friedrichshafen (DE)
(72) Erfinder: WILHELM, Malte, 66123 Saarbrücken (DE); SCHULZ, Jürgen, 66117 Saarbrücken (DE); KIRST, Christoph, 66346 Püttlingen (DE)
(86) Internationale Anmeldenummer: PCT/EP2002/011029
(87) Internationale Veröffentlichungsnummer: WO 2003/031866

(56) Entgegenhaltungen:
- EP-A- 0 133 069
- EP-A- 0 589 507
- US-A- 5 456 295
- US-A- 6 068 029

## Beschreibung

Die vorliegende Erfindung betrifft ein Verfahren zur Ölbefüllung bzw. zur Einstellung eines Flüssigkeitsstandes, insbesondere des Ölstandes in einem Getriebe gemäß dem Oberbegriff des Patentanspruchs 1 und eine Befülleinrichtung zu dessen Durchführung.

Bei modernen Maschinen und Nutzfahrzeuggetrieben wird heutzutage eine Lebensdauerbefüllung mit Maschinenöl bzw. Getriebeöl angestrebt, wobei beispielsweise eine typische Kilometerleistung mit einem dieser verwendeten Getriebe in der Größenordnung von 1 Million Kilometer liegt.

Für die Einstellung der Ölmenge bzw. des Ölstands bei Automatgetrieben wird aufgrund der geringen Differenzen zwischen der zulässigen Minimum- und Maximumölmenge eine hohe Genauigkeit gefordert. Außerdem sollte aus Gewichtsgründen die Differenz zwischen dem einzustellenden Minimum und Maximum möglichst gering sein.

Bei Unterschreitung des Minimums kann es insbesondere bei Kälte, Fahrzeugneigung (längs und quer) oder Beschleunigung (Kurvenfahrt, Anfahren oder Bremsen) im einfachsten Fall zu Ansauggeräuschen kommen. In schwerwiegenden Fällen sind aufgrund der mangelhaften Druckversorgung Funktionsstörungen oder auch starke Beschädigungen der Kupplungsbeläge möglich, was in einem Ausfall des Getriebes resultiert.

Bei einer Überschreitung des Maximums wiederum besteht die Gefahr, dass bei hohen Temperaturen und hohen Drehzahlen des Getriebes der Ölstand soweit ansteigt, dass die rotierenden Teile in das Öl eintauchen. Die direkte Folge ist ein starkes Verschäumen mit hohen Ölaustritt aus dem Entlüfter, wobei der Ölaustritt später zu einer Unterschreitung des Minimums und den daraus resultierenden Folgen führen kann. Bei einer Überschreitung des Maximums und daraus resultierendem Ölaustritt besteht außerdem Brandgefahr, weil sich das austretende Öl an heißen Teilen, z. B. der Auspuffanlage, entzünden kann. Ein zu hoher Ölstand mit daraus resultierendem Ölaustritt kann außerdem zur Verschmutzung der Umwelt und zur Ausbildung einer glitschigen Straßenoberfläche führen.

Daher erweist sich eine möglichst exakte Einstellung der Ölmenge bzw. des Ölstands bei Automatgetrieben als unbedingt erforderlich. Hierbei ist die deutliche Temperaturabhängigkeit des ATF-Ölstandes (Automatic Transmission Fluid) zu berücksichtigen.

Ein einfaches Verfahren der Ölstandseinstellung erfolgt mittels Ölmessstab unter Berücksichtigung der Temperatur. Die Ölstandseinstellung lässt sich mittels dieses Verfahrens nur mit reduzierter Genauigkeit durchführen. Prinzipiell ist eine Ölstandseinstellung sowohl bei kaltem als auch bei warmem Getriebe möglich, da normalerweise ein Füllstandsbereich für kalt und auch für warm am Messstab markiert ist. Problematisch ist hierbei jedoch, dass die Öltemperatur entweder gemessen oder geschätzt werden muss. Die Genauigkeit der Füllmenge hängt außerdem davon ab, wie genau sich der Ölstand am Messstab ablesen lässt. Bis zur endgültigen Einstellung können unter Umständen Zwischenablesungen erforderlich sein.

Eine weiteres Verfahren zur Ölstandseinstellung besteht darin, mittels fester Überlaufkante bei einer möglichst genau definierten Temperatur den Befüllvorgang durchzuführen. Hierbei hängt die Genauigkeit der Füllmenge davon ab, wie genau die Getriebetemperatur bei der Befüllung die Temperatur trifft, für welche die Überlaufkante definiert wurde. Normalerweise ist hier nur ein relativ enger Temperaturbereich für die Einstellung zugelassen, um die Befülltoleranzen nicht zu groß werden zu lassen. Dies hat zur Folge, dass eine Ölstandskontrolle nicht jederzeit möglich ist. So muss beispielsweise ein betriebswarmes Fahrzeug einige Zeit stehen, bis sich die Öltemperatur auf ein Niveau abgesenkt hat, das sich innerhalb der engen Temperaturtoleranzen für die Einstellung befindet.

Ein Verfahren zur elektrischen Ölstandsbestimmung mit Warmeinrichtung ist in der EP 0 133 069 beschrieben. Ein weiteres Verfahren einer elektrischen Ölstandsmessung mit Hilfe eines Sensors und eine Berechnung der notwendigen Ölstandskorrektur für Einstellungen ist in der EP 0 589 507 offenbart.

Des weiteren offenbart die DE 196 44 738 A1 eine Vorrichtung zur Einstellung eines Flüssigkeitsstandes und insbesondere des Ölstandes in einem Automatgetriebe mittels einer in Abhängigkeit von der Temperatur verstellbaren Überlaufkante oder Überlauföffnung. Die Verwendung eines thermostatischen Ventils zur Ölstandseinstellung wird in der US 4,921,165 offenbart.

Zudem sind Befüllungen mit Festmengen nach der Differenzgewichtsmethode oder mittels Absaugen durch Eintauchen von Lanzen bekannt; diese Verfahren arbeiten jedoch mit einer großen Toleranz.

Der vorliegenden Erfindung liegt die Aufgabe zugrunde, ein Verfahren zur Ölbefüllung für Getriebe und insbesondere Automatgetriebe anzugeben, welches eine exakte Befüllung unter Berücksichtigung von Bautoleranzen und unterschiedlichen Bauteilen ermöglicht. Zudem soll eine Befülleinrichtung vorgeschlagen werden, welche eine exakte Dosierung ermöglicht. Das Verfahren soll auch zur Einstellung des Flüssigkeitsstandes für weitere Bauteile einsetzbar sein.

Diese Aufgabe wird für ein Verfahren durch die Merkmale des Patentanspruchs 1 gelöst. Weitere Ausgestaltungen der Erfindung gehen aus den entsprechenden Unteransprüchen hervor.

Demnach wird vorgeschlagen, zum Ausgleich von Bautoleranzen und unterschiedlichen Bauteilen, sowie unterschiedlichen Füllständen von hydraulischen Bauteilen (beispielsweise Wandler) eine dynamische Ölstandseinstellung mit Überlaufcharakter durchzuführen, die bevorzugterweise mittels einer koaxialen Befüllpinole mit abgedichtetem Mundstück, die an die Getriebeüberlaufbohrung hydraulisch zustellbar ist, den exakten erforderlichen Ölstand einstellt.

Im Rahmen des erfindungsgemäßen Verfahrens ist vorgesehen, mittels einer an einer Ölüberlaufbohrung am Getriebe angeschlossenen Befülleinrichtung als ersten Schritt eine Erstölbefüllung mit einer Grundmenge durchzuführen. Anschließend, wenn die Grundmenge eingefüllt ist, erfolgt eine Absaugung von überschüssigem Öl erfolgt, wobei gleichzeitig eine kontinuierliche Nachdosierung bei einer Einfüllleistung, die geringer ist als die Absaugleistung, durchgeführt wird.

Am Ende erfolgt eine Endöleinstellung durch einmaliges Nachdosieren von einer bestimmten Menge Öl bei abgeschalteter Absaugung, wobei nach Beendigung der Abtropfzeit des überlaufenden Öls die Ölüberlaufbohrung am Getriebe verschlossen wird.

Im Rahmen einer Weiterentwicklung wird ein Öl-Offsetmenge berechnet, die anschließend über eine Getriebebohrung nachdosiert wird. Die Öl-Offsetmenge wird auf Basis von Signalen eines Temperatursensors, der die Öltemperatur ermittelt und den Wert an einen angeschlossenen Rechner weiterleitet, und aus einem Korrekturfaktor zur Korrektur von prüfstandspezifischen Parametern, einem Faktor zur Definition der fahrzeugseitigen Ölkühlervarianten und des Einbauwinkels und einem empirisch ermittelten Faktor zur Korrektur des Temperaturganges bezogen auf eine definierte Temperatur berechnet.

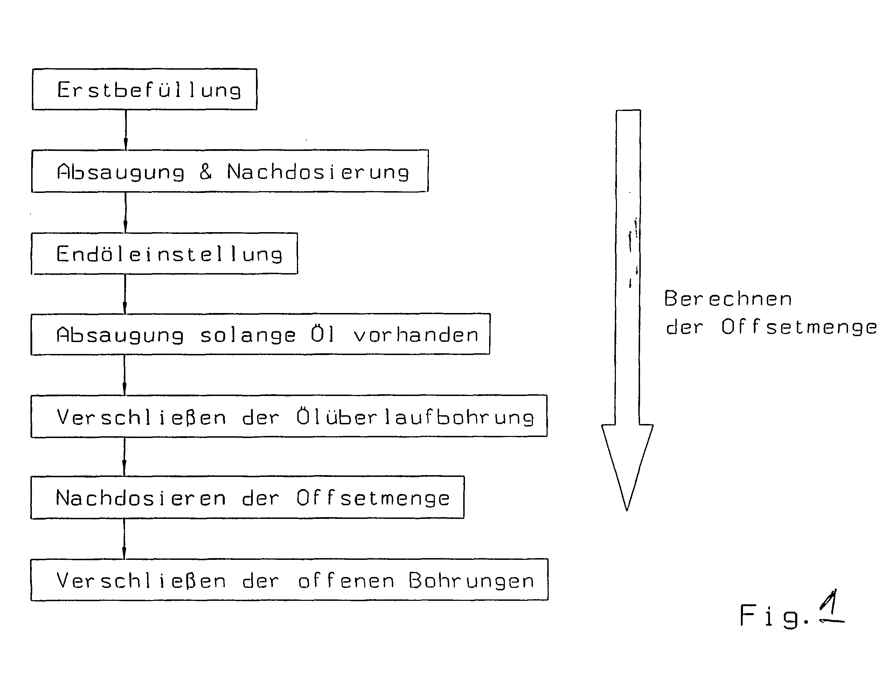

Die Erfindung wird im folgenden anhand der beigefügten Figur, die ein schematisches Blockdiagramm der Verfahrensschritte darstellt, näher erläutert.

Zunächst wird auf einem Prüfstand und insbesondere einem Funktionsprüfstand zur Prüfung des dynamischen Verhaltens des komplettierten Getriebes nach dem Spannen des Prüfgetriebes an der Wandlerglocke bzw. nach dem Öffnen der Leitungsanschlüsse am Getriebe eine Befülleinrichtung an die Getriebeüberlaufbohrung hydraulisch zugestellt. Besonders vorteilhaft ist die Verwendung einer koaxialen Befüllpinole mit abgedichtetem Mundstück.

Das koaxiale Befüllrohr der Befüllpinole ist vorteilhafterweise als 2-Kanalsystem mit Ringflächenanschluss und zentralem Befüllrohr in gekrümmter Ausführung mit vertikal gerichteter ovaler Eintrittsöffnung ausgeführt.

Während der Adaptionszeit der restlichen erforderlichen Prüfstandszustellbewegungen erfolgt erfindungsgemäß eine Erstölbefüllung; ein typischer Wert hierfür ist 4,5 1 gefiltertes Lebensdaueröl) über beide Befüllkanäle. Der Prüflauf startet mit den statischen Prüfschritten Parksperre und Wandlervorbefüllung noch während der Grundöleingabe, sodass nach Freigabe durch den Volumenstromzähler und den Durchflusssensor der dynamische Prüflauf startbereit ist.

Wenn die Grundmenge eingefüllt ist, wird durch Umschalten der Prüfstandshydraulik eine Absaugung mittels einer Hydraulikpumpe aktiviert, die über die Ringfläche und den zweiten Kanal (Kanal 2) der Befüllpinole überschüssiges Öl absaugt.

Zeitgleich wird über die gekrümmte vertikal gerichtete zentrale Rohröffnung (Kanal 1) weiter vortemperiertes, im Einmaldurchgang gefiltertes Lebensdaueröl nachdosiert.

Die Nachdosierung erfolgt gemäß der Erfindung kontinuierlich über einen kleinen Volumenstrom über Kanal 1, um die Versorgung aller Komponenten in der dynamischen Funktionsprüfung sicherzustellen. (Die Absaugleistung im Kanal 2 ist immer größer als das Zulaufvolumen im Kanal 1).

Erfindungsgemäß ist eine Prozessabsicherung vorgesehen, die unmittelbar am Getriebeeingang mittels eines digitalen Unterdruckschalters und eines kapazitiven Sensors in redundanter Verschaltung erfolgt.

Am Ende der Prüfsequenz erfolgt die Endöleinstellung , bevorzugterweise in Position P mit Leerlaufdrehzahl, durch einmaliges Nachdosieren von einer bestimmten Menge Öl (ein typischer Wert ist 0,3 l) über Kanal 1, während Kanal 2 als Sauganschluß ist nicht mehr aktiv ist. Anschließend erfolgt eine Umschaltung von Kanal 1 auf die Saugpumpe von Kanal 2.

Die nachdosierte Menge wird ebenso wie die Totvolumenmenge mittels des Unterdruckschalters und/oder des kapazitiven Sensors erkannt, wobei durch eine redundante Abfrage auf "Öl vorhanden" und "kein Öl vorhanden" die Abtropfzeit abgewartet wird.

Als weiterer Schritt entfernt die Prüfstandssteuerung das hydraulische Mundstück und vertaktet eine Schraubereinheit zum Verschließen der Ölüberlaufbohrung.

Zeitgleich wird über einen Temperatursensor, der bevorzugterweise prüfstandsseitig angeschlossen ist, die Öltemperatur ermittelt und der Wert an einen angeschlossenen Prüfrechner weitergeleitet, um aus einem Korrekturfaktor zur Korrektur von prüfstandspezifischen Parametern, einem Faktor zur Definition der fahrzeugseitigen Ölkühlervarianten und des Einbauwinkels und einem empirisch ermittelten Faktor zur Korrektur des Temperaturganges (bezogen auf eine definierte Temperatur) über die gemessene Öltemperatur eine Offsetmenge zu berechnen.

Diese berechnete Offsetmenge wird im Anschluss bevorzugterweise über den Getriebekühleranschluss nachdosiert; es folgt ein automatisiertes Verschließen der offenen Getriebe-Kühlerbohrungen mit einem öllöslichen Fettstopfen, um während des Weitertransportes keinen Ölverlust am gefüllten Getriebe zu erzeugen, bis zum endgültigen Verschließen der offenen Kühleranschlüsse mit Klappen, vorteilhafterweise aus Kunststoff.

Durch das erfindungsgemäße Verfahren z.B. ist eine Niveaubefüllung in einem Betriebspunkt von z. B. 40 °C mit Bezug zur Fahrzeugneigung und externen Kühlerzugabemengen mit einer Toleranz von etwa +/-100 g (entsprechend etwa +/-150 ml) möglich.

## Patentansprüche

1. Verfahren zur Ölbefüllung für Getriebe, insbesondere für Automatgetriebe eines Kraftfahrzeugs, **dadurch gekennzeichnet, dass** mittels einer an einer Ölüberlaufbohrung am Getriebe angeschlossenen Befülleinrichtung als erster Schritt eine Erstölbefüllung mit einer Grundmenge erfolgt, dass, wenn die Grundmenge eingefüllt ist, eine Absaugung von überschüssigem Öl erfolgt, wobei gleichzeitig eine kontinuierliche Nachdosierung bei einer Einfüllleistung, die geringer ist als die Absaugleistung, durchgeführt wird und dass am Ende eine Endöleinstellung durch einmaliges Nachdosieren von einer bestimmten Menge Öl bei abgeschalteter Absaugung erfolgt, wobei nach Beendigung der Abtropfzeit und Absaugen des überlaufenden Öls die Ölüberlaufbohrung am Getriebe verschlossen wird.

2. Verfahren nach Anspruch 1, **dadurch gekennzeichnet, dass** die Endöleinstellung in Position P mit Leerlaufdrehzahl erfolgt.

3. Verfahren nach Anspruch 1 oder 2, mit dem zusätzlichen Schritt, dass eine Öl-Offsetmenge berechnet wird, die anschließend über eine Getriebebohrung nachdosiert wird, die nach dem Nachdosieren verschlossen wird.

4. Verfahren nach Anspruch 3, **dadurch gekennzeichnet, dass** die Offsetmenge auf Basis von Signalen eines Temperatursensors, der die Öltemperatur ermittelt und den Wert an einen angeschlossenen Rechner weiterleitet, und aus einem Korrekturfaktor zur Korrektur von prüfstandspezizischen Parametern, einem Faktor zur Definition der fahrzeugseitigen Ölkühlervarianten und des Einbauwinkels und einem empirisch ermittelten Faktor zur Korrektur des Temperaturganges bezogen auf eine definierte Temperatur, berechnet wird.

5. Verfahren nach einem der Ansprüche 1 bis 4, **dadurch gekennzeichnet, dass** der Befüllvorgang nach dem Öffnen der Leitungsanschlüsse am Getriebe durchgeführt wird.

6. Verfahren nach einem der vorangehenden Ansprüche, **dadurch gekennzeichnet, dass** es auf einem Prüfstand durchgeführt wird.

7. Verfahren nach einem der vorangehenden Ansprüche, **dadurch gekennzeichnet, dass** während der Erstölbefüllung statische Prüfschritte und/oder eine Wandlervorbefüllung durchgeführt werden.

8. Verfahren nach einem der vorangehenden Ansprüche, **dadurch gekennzeichnet, dass** die Absaugung von überschüssigem Öl mittels einer Hydraulikpumpe erfolgt.

9. Verfahren nach einem der vorangehenden Ansprüche, **dadurch gekennzeichnet, dass** das nachdosierte Öl vortemperiert wird.

10. Verfahren nach einem der vorangehenden Ansprüche, **dadurch gekennzeichnet, dass** die nachdosierte Menge mittels eines Unterdruckschalters und/oder eines kapazitiven Sensors erkannt wird, wobei die Abtropfzeit des Öls abgewartet wird.

11. Verfahren nach einem der vorangehenden Ansprüche, **dadurch gekennzeichnet, dass** als Befülleinrichtung eine koaxiale Befüllpinole mit abgedichtetem Mundstück verwendet wird.

12. Verfahren nach Anspruch 11, **dadurch gekennzeichnet, dass** eine Befüllpinole verwendet wird, deren koaxiales Befüllrohr als 2-Kanalsystem mit Ringflächenanschluss und zentralem Befüllrohr in gekrümmter Ausführung mit vertikal gerichteter ovaler Eintrittsöffnung ausgeführt ist, verwendet wird.

13. Verfahren nach Anspruch 11 oder 12, **dadurch gekennzeichnet, dass** die Befülleinrichtung hydraulisch zugestellt wird.

## Claims

1. The invention relates to an oil-filling method for transmissions, in particular for automatic motor vehicle transmissions, **characterized in that** via a filling device connected to an oil overflow bore on the transmission, a first basic quantity filling is performed, after which excessive oil is sucked out while at the same time continuous re-dosing takes place if the quantity sucked out exceeds the quantity filled; and that a final oil setting is performed with deactivated suction through a one-shot re-dosage of a certain oil quantity, with the oil overflow bore on the transmission being closed when there is no more drip-off and after the overflowing oil has been sucked off.

2. A method according to claim 1, **characterized in that** the final oil setting takes place in position P at idling speed.

3. A method according to claim 1 or 2, with an additional step being included insofar as an oil offset amount is determined and subsequently re-dosed via a transmission bore which is closed after re-dosage.

4. A method according to claim 3, **characterized in that** the offset amount is determined on the basis of the signals of a temperature sensor which determines the oil temperature and transmits it to a computer, of a correction factor for the correction of bench-specific parameters, of a factor for the definition of vehicle-mounted oil cooler variants and installation angles, and of an empirically determined factor for the correction of the temperature sensitivity related to a defined temperature.

5. A method according to one of the claims 1 through 4, **characterized in that** filling is performed after opening of the line connections on the transmission.

6. A method according to one of the preceding claims, **characterized in that** it is performed on a test bench.

7. A method according to one of the preceding claims, **characterized in that** static tests and/or precharging of the converter are/is carried out during initial filling.

8. A method according to one of the preceding claims, **characterized in that** excessive oil is sucked out by means of a hydraulic pump.

9. A method according to one of the preceding claims, **characterized in that** the re-dosed oil is brought to the right temperature.

10. A method according to one of the preceding claims, **characterized in that** the re-dosed quantity is recognized by a vacuum switch and/or a capacitive sensor, with the oil dripping time being considered.

11. A method according to one of the preceding claims, **characterized in that** a coaxial filling sleeve with sealed-off mouthpiece is used as filling device.

12. A method according to claim 11, **characterized in that** a filling sleeve is used, the coaxial filling tube of which is designed as a dual-duct system with torus connection and a central, crooked filling tube with vertically oriented oval inlet opening.

13. A method according to claim 11 or 12, **characterized in that** the filling device is operated hydraulically.

## Revendications

1. Procédé de remplissage d'huile de boîtes de vitesses, notamment de boîtes de vitesses automatiques de véhicules automobiles, **caractérisé en ce que**, dans une première étape, à l'aide d'un dispositif de remplissage relié à un orifice de trop-plein sur la boîte de vitesses est effectué un premier remplissage avec une quantité de base, **en ce que**, lorsque cette quantité de base est introduite, est effectuée une aspiration de l'excès d'huile, tout en mettant en oeuvre un dosage ultérieur continu, en tenant compte du fait que ie débit de remplissage est inférieur au débit d'aspiration et que, finalement, est effectué un réglage d'huile final au moyen d'un dosage ultérieur unique d'une quantité d'huile définie lorsque l'aspiration est interrompue, sachant qu' à l'issue du temps d'égouttage et de l'aspiration de l'excès d'huile l'orifice de trop-plein sur la boîte de vitesses est fermé.

2. Procédé selon la revendication 1, **caractérisé en ce que** le réglage d'huile final est effectué au régime de ralenti, la boîte de vitesses étant en position P.

3. Procédé selon la revendication 1 ou 2, **caractérisé par** une étape supplémentaire dans laquelle est calculée une quantité offset d'huile, cette quantité étant ensuite dosée ultérieurement par un orifice de la boîte de vitesses, cet orifice étant fermé après le dosage ultérieur.

4. Procédé selon la revendication 3, **caractérisé en ce que** la quantité offset est calculée sur la base de signaux émis par un capteur de température qui détermine la température de l'huile et qui transmet la valeur déterminée à un calculateur relié, sur la base d'un coefficient de correction pour la correction de paramètres spécifiques au banc d'essai, sur la base d'un facteur pour la définition des variantes de radiateurs d'huile côté véhicule et de l'angle d'installation et sur la base d'un facteur déterminé par voie empirique pour la correction de l'allure de la température par rapport à une température définie.

5. Procédé selon une des revendications 1 à 4, **caractérisé en ce que** l'opération de remplissage est réalisée après l'ouverture des raccords des conduites sur la boîte de vitesses.

6. Procédé selon une des revendications précédentes, **caractérisé en ce qu'**il est effectué sur un banc d'essai.

7. Procédé selon une des revendications précédentes, **caractérisé en ce que** pendant le premier remplissage d'huile des contrôles statiques et/ou un pré-remplissage du convertisseur sont effectués.

8. Procédé selon une des revendications précédentes, **caractérisé en ce que** l'aspiration de l'excès d'huile est effectuée à l'aide d'une pompe hydraulique.

9. Procédé selon une des revendications précédentes, **caractérisé en ce que** l'huile utilisée pour le dosage ultérieur est tempérée au préalable.

10. Procédé selon une des revendications précédentes, **caractérisé en ce que** la quantité de dosage ultérieur est détectée à l'aide d'un contacteur à dépression et/ou d'un capteur capacitif, tout en laissant d'abord égoutter l'huile.

11. Procédé selon une des revendications précédentes, **caractérisé en ce que** en tant que dispositif de remplissage est utilisé une douille de remplissage avec un gicleur étanchéifié.

12. Procédé selon la revendication 11, **caractérisé en ce que** le système comporte une douille de remplissage dont le tube de remplissage coaxial est réalisé comme système à deux canaux avec un raccord à surface annulaire et un tube de remplissage central en version coudée avec orifice d'admission ovale et orienté en sens vertical.

13. Procédé selon la revendication 11 ou 12, **caractérisé en ce que** le dispositif de remplissage est activé par voie hydraulique.
